# EUROPEAN PATENT APPLICATION

(11) **EP 3 715 084 A1**
(43) Date of publication of application: **30.09.2020**
(21) Application number: 19188549.0
(22) Date of filing: 26.07.2019
(51) Int. Cl.: B29C 45/14, B29C 44/12, A47L 15/42, D06F 39/12

(54) **WORKTOP FOR HOME APPLIANCE AND A PRODUCTION METHOD THEREOF**

(30) Priority: 29.03.2019 TR 201904794
(71) Applicant: Farel Plastik Elektrik ve Elektronik Imalat Sanayi A.S., 59500 Tekirdag (TR)
(72) Inventor: AKÇALI, Haluk, Tekirdag (TR)
(74) Representative: Yamankaradeniz, Kemal

(57) **Abstract**

The present invention relates to a production method of worktop (1) for use in home appliances, wherein the said production method produces a single piece worktop (1) by injecting plastic frame (3) structures over melamine impregnated decorative paper covered plates and / or glass surface plates and / or fiberboard plates and / or epoxy surface plates and / or laminate covered plastic plates and / or high temperature-resistant plastic plates and / or melamine impregnated plastic plates and / or all types of backside plastic injection surfaced plates through conventional injection and / or microcellular foam injection and / or chemical foam injection in at least one lateral area with or without plastic fittings for connection of the said worktop (1) to the appliance.

## Description

### FIELD OF THE INVENTION

The invention relates to a production method of the worktops used in home appliance industry.

The invention more particularly relates to a production method and processes of a single piece worktop suitable for use in home appliances, wherein the said worktop can be produced by injecting singular frame structures over the plate through conventional injection and / or microcellular foam injection (physical foaming) and / or chemical foam injection with or without plastic fittings and/or support parts.

### BACKGROUND ART

Washing machines, dishwashers, refrigerators and other similar home appliances contain a part known as worktop at their top which lies parallel to the ground. Worktops play a role in providing rigidity and load balancing as well as protecting the appliance from heat and external factors and ensuring water tightness. In existing applications, the mentioned worktop is preferably manufactured by means of covering the top and bottom portions of a wooden fiberboard with a melamine impregnated decorative paper and adhesive bonding it together with plastic frames and support parts. This method typically involves one or multiple injection processes on the frame and other plastic sub-components and a further adhesive bonding process. Existing applications make use of wooded fiberboard in worktop production, which is an economically sustainable, easy-to-use and easy-to-obtain, widely used material in the technical fields. However, use of adhesives during the production and the adhesive bonding process leads to problems in sustainability of production. The adhesive bonding process also causes loss of time in the existing applications. Moreover, adhesive bonding requires a robot and / or labor for application and it also brings additional costs. Consequently, production costs increase which results in reduced profitability and competitive advantage.

Research on prior art literature revealed a Patent Application No. TR 2018/15308, titled "Worktop Suitable for Use in White Goods and A Production Method Thereof". The said patent application relates to a worktop suitable for use in white goods and a production method thereof, wherein the said worktop comprises at least one plate composed by at least 50% (by weight) of inorganic compounds, and at least one frame surrounding the plate which is configured to assemble the worktop to the appliance. The worktop presented in the said invention is produced by pouring a molding mixture to the fiber mesh placed on top a moving conveyor belt, drying the mold and then, surrounding it with a frame. The said molding mixture contains various materials including cement and silica sand. However, the said invention does not suggest any injection method or a solution to avoid adhesive use.

Consequently, as described above, various problems and challenges are confronted in the technical field, and existing applications are lacking in providing a solution to these problems and challenges which necessitates the introduction of further developments and novelties to the technical field.

### BRIEF DESCRIPTION OF THE INVENTION

The present invention relates to a worktop for home appliances and a production method thereof, wherein the said worktop meets the above-mentioned requirements, eliminates all disadvantages and brings additional benefits.

The main object of the invention is to provide a worktop for home appliances. Thanks to the present invention, a worktop for home appliances can be produced faster with less cost of production compared to the existing applications.

Another object of the invention is to provide highly efficient production through one shot plastic injection molding method using a single mold.

Yet another object of the invention is to create competitive advantage by reducing the cost of production. The present invention significantly reduces the cost of production by means of providing a method for production of worktop without any need for adhesives and adhesive bonding processes. Moreover, the method presented in the invention puts an end to dependency on expensive robotic automation systems required during the adhesive bonding process, hence provides savings on the investment cost and energy use. This contributes to competitiveness and profitability under the existing circumstances.

Another object of the invention is to allow for production of a worktop without adhesive use by means of injecting a frame on a glass surface plate, a fiberboard plate, epoxy surface plate, melamine impregnated decorative paper covered plate (with or without plastic injection molding), laminate covered plastic plate, high temperature-resistant plastic plate or melamine impregnated plastic plate. This makes it possible to produce a single piece worktop by injecting frame structures over the plate through conventional injection and / or microcellular foam injection and / or chemical foam injection without plastic fittings.

The present invention relates to a production method of worktop suitable for use in home appliances, wherein the said production method achieves all abovementioned objects by means of producing a single piece worktop by injecting plastic frame structures over melamine impregnated decorative paper covered plates and / or glass surface plates and / or fiberboard plates and / or epoxy surface plates and / or laminate covered plastic plates and / or high temperature-resistant plastic plates and / or melamine impregnated plastic plates and / or all types of backside plastic injection surfaced plates through conventional injection and / or microcellular foam injection and / or chemical foam injection in at least one lateral area with or without plastic fittings for connection of the said worktop to the appliance.

The structural properties, characteristics and all benefits of the invention will be more clearly understood by reading the detailed description of the invention in conjunction with the below drawings. Therefore, the invention will be best appreciated by reading the detailed description in conjunction with the accompanying drawings.

### BRIEF DESCRIPTION OF DRAWINGS

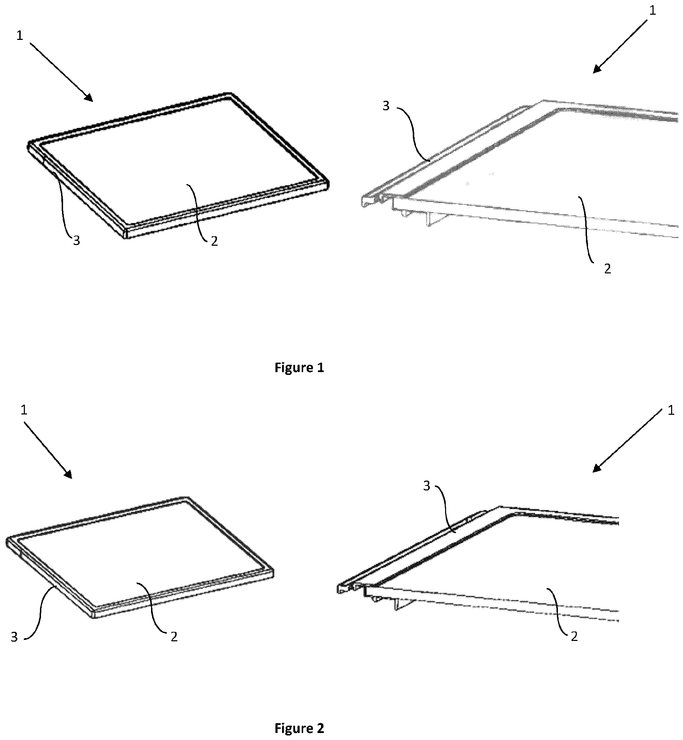

- Figure 1: is a general view of a worktop created by conventional injection molding.
- Figure 2: is a general view of a worktop created by physical foamed injection molding.

### REFERENCE NUMERALS

- 1: Worktop
- 2: Plate
- 3: Frame

### DETAILED DESCRIPTION OF THE INVENTION

The detailed description of the invention is intended for purposes of illustration of the preferred embodiments of the invention only and is not intended to limit the scope of the disclosure.

The present invention relates to a production method of worktop (1) suitable for use in home appliances. The said worktop (1) is produced by means of melamine impregnated decorative paper covered plates, glass surface plates, fiberboard plates, epoxy surface plates, laminate covered plastic plates, high temperature-resistant plastic plate or melamine impregnated plastic plates. Single piece worktop (1) is produced by injection molding all required lateral surfaces (top surface and / or side surfaces and / or bottom surface) of plate suitable to the product type with or without a fitting.

In the present invention, composite, plastic, plastic-derived, glass, stone and similar one piece materials, melamine impregnated decorative paper covered plates, glass surface plates, fiberboard plates, epoxy surface plates, laminate covered plastic plates, high temperature-resistant plastic plates or melamine impregnated plastic plate and / or a combination thereof are used as a plate (2). The same plate (2) element can also be produced by performing plastic injection molding to the back portion of a melamine impregnated decorative paper.

At this stage, individual or combinations selected from the group of cross-linking agents suitable to the raw materials, maleic anhydride combinations, strength-increasing additives, thermoplastic elastomers, SBS (Styrene Butylene Styrene), SEBS (Styrene Ethylene Butylene Styrene), maleic anhydride containing homo- and / or co- and / or terpolymers (polypropylene, ABS, polypropylene and ABS mixtures), adhesion-improving additives and cross-linking additives are used to improve adhesion quality of the raw material and provide a sufficient level of adhesion. This makes it possible to obtain a main body of plate (2) for the worktop (1) out of composite, plastic, plastic-derived, glass, stone and similar one piece materials, melamine impregnated decorative paper covered plates, glass surface plates, fiberboard plates, epoxy surface plates, laminate covered plastic plates, high temperature-resistant plastic plates or melamine impregnated plastic plate and / or a combination thereof. After creating the plate (2), worktop (1) frame (3) is injected to the edges of the plate (2). At this stage, two different processes can be applied to create a frame (3). The first process is based on the principle of taking the frame (3) out of injection together with the plate (2) without fittings. The other process is based on taking the frame (3) out of injection together with the plate (2) with fittings in a more ready-assembled manner. The method of the present invention, various injection molding processes can be applied to the frame (3) which can be produced by above two processes. Conventional injection molding, physical foaming (microcellular foam injection molding), chemical foam injection or a combination thereof can be applied. Microcellular foam injection molding is different from conventional plastic injection molding in that it expands microcells inside the plastic and provides up to 20% savings in weight in grams by reducing the density of plastic solution with homogenized supercritical fluid-gas mixture. In such injection applications, plastic materials including but not limited to polypropylenes, carbon fiber-reinforced polypropylenes, talk-reinforced polypropylenes, glass fiber-reinforced polypropylenes, ABS (Acrylonitrile Butadiene Styrene), carbon fiber-reinforced ABS, talk-reinforced ABS, glass fiber-reinforced ABS, polyester group polymers, PA 6, PA 6.6 and their carbon fibers, glass fiber and talk-reinforced structures, maleic anhydride containing homo- and / or co- and / or terpolymers or polymer mixtures (polypropylenes, ABS, polypropylene and ABS mixtures), maleic anhydride combinations, polycarbonate/ABS or a combination thereof are used. During injections, core and cavity molds are used. The said core and cavity molds help to produce the plate (2) in one piece and generate pressure output thanks to placement of the plate (2) and raw material flow. After the injection process, if required, laser and etching processes and also adhesion-improving operations can be performed on the surface of the worktop (1).

## Claims

1. A production method of a worktop (1) suitable for use in home appliances, wherein the said production method produces a single piece worktop (1) by injecting plastic frame (3) structures over melamine impregnated decorative paper covered plates and / or glass surface plates and / or fiberboard plates and / or epoxy surface plates and / or laminate covered plastic plates and / or high temperature-resistant plastic plates and / or melamine impregnated plastic plates and / or all types of backside plastic injection surfaced plates through conventional injection and / or microcellular foam injection and / or chemical foam injection in at least one lateral area with or without plastic fittings for connection of the said worktop (1) to the appliance.

2. The production method of a worktop (1) according to any of the above claims, wherein individual or combinations selected from the group of polypropylenes, carbon fiber-reinforced polypropylenes, talk-reinforced polypropylenes, glass fiber-reinforced polypropylenes, maleic anhydride containing homo- and / or co- and / or terpolymers (polypropylenes, ABS, polypropylene and ABS mixtures), maleic anhydride combinations, ABS (Acrylonitrile Butadiene Styrene), carbon fiber-reinforced ABS, talk-reinforced ABS, glass fiber-reinforced ABS, polyester group polymers, PA 6, PA 6.6 and their carbon fibers, glass fiber and talk-reinforced structures, polycarbonate/ABS are used as injection molding material.

3. The production method of a worktop (1) according to any of the above claims, wherein individual or combinations selected from the group of cross-linking agents, maleic anhydride combinations, strength-increasing additives, thermoplastic elastomers, SBS (Styrene Butylene Styrene), SEBS (Styrene Ethylene Butylene Styrene), adhesion-improving additives and cross - linking additives are used to improve adhesion quality and provide a sufficient level of adhesion.

4. The production method of a worktop (1) according to any of the above claims, wherein the said production method comprises a process of frame (3) injection molding without separate fittings.

5. The production method of a worktop (1) according to any of the above claims, wherein the said production method comprises a process of frame (3) injection molding with fittings.
